# EUROPÄISCHE PATENTSCHRIFT

(11) **EP 2 921 333 B1**
(45) Veröffentlichungstag und Bekanntmachung des Hinweises auf die Patenterteilung: **14.09.2016**
(21) Anmeldenummer: 15155916.8
(22) Anmeldetag: 20.02.2015
(51) Int. Cl.: B60K 17/28, B60K 17/346, B60K 17/36, B60K 25/06, F16H 48/20

(54) **Verteilergetriebe**
Distributor gear
Boîte de transfert

(30) Priorität: 20.03.2014 DE 102014205227
(43) Veröffentlichungstag der Anmeldung: 23.09.2015
(73) Patentinhaber: ZF Friedrichshafen AG, 88046 Friedrichshafen (DE)
(72) Erfinder: Reitinger, Franz, 4091 Vichtenstein (AT)

(56) Entgegenhaltungen:
- EP-A2- 2 574 490
- AT-B- 333 132
- DE-A1-102010 040 883
- GB-A- 2 158 787
- US-A1- 2003 019 672
- US-A1- 2005 137 042

## Beschreibung

Die Erfindung betrifft ein Verteilergetriebe für Nutzfahrzeuge mit mehreren angetriebenen Achsen, wobei das Verteilergetriebe ein Differenzialgetriebe beinhaltet, welches sperrbar ausgeführt ist.

Die EP 2 574 490 A2 offenbart ein gattungsgemäßes Verteilergetriebe umfassend eine Eingangswelle zur Aufnahme eines Drehmoments, eine von der Eingangswelle beabstandete Abtriebswelle, eine sich in der Eingangswelle befindende Verteilerdifferentialeinheit, eine von der Verteilerdifferentialeinheit antreibbare Zwischenwelle und eine Betätigungseinheit. Die Betätigungseinheit ist dazu konfiguriert, die Zwischenwelle zwischen einer ersten Position, in der die Zwischenwelle Drehmoment auf die Abtriebswelle überträgt, und einer zweiten Position, in der die Zwischenwelle kein Drehmoment überträgt, zu bewegen.

Die EP 1254326 B1 offenbart ein gattungsgemäßes Verteilergetriebe für Nutzfahrzeuge, bei welchem die Antriebswelle und eine erste Abtriebswelle koaxial angeordnet sind und eine zweite Abtriebswelle beabstandet zur Antriebswelle angeordnet ist und ein Differenzialgetriebe koaxial zur Antriebswelle angeordnet ist.

Aus der US 2005/137042 ist ein hybrides elektromechanisches Compound-Split-Getriebe mit zwei Betriebsarten bekannt. Das Getriebe umfasst u.a. eine Antriebswelle und eine Nebenabtriebswelle, wobei die Nebenabtriebswelle in permanenter Wirkverbindung mit der Antriebswelle steht.

Der vorliegenden Erfindung liegt die Aufgabe zugrunde ein Verteilergetriebe für Nutzfahrzeuge zu schaffen, bei welchem die Antriebswelle und die erste Abtriebswelle koaxial zueinander angeordnet sind und die zweite Abtriebswelle beabstandet zur Antriebswelle angeordnet ist und ein Differenzialgetriebe koaxial zur Antriebswelle angeordnet ist und das Verteilergetriebe einen Nebenabtrieb aufweist, wobei das Verteilergetriebe in seiner Baulänge sehr kurz auszuführen ist und der Nebenabtrieb bei Stillstand des Fahrzeugs betreibbar sein muss.

Die Aufgabe wird durch ein auch die kennzeichnenden Merkmale des Hauptanspruchs aufweisendes gattungsgemäßes Verteilergetriebe gelöst.

Erfindungsgemäß weist das Verteilergetriebe eine Antriebswelle und eine erste Abtriebswelle und eine zweite Abtriebswelle auf, wobei die zweite Abtriebswelle beabstandet zur Antriebswelle angeordnet ist und die erste Abtriebswelle koaxial zur Antriebswelle angeordnet ist. Ein Differenzialgetriebe ist koaxial zur Antriebswelle angeordnet und ein Nebenabtrieb steht in permanenter Wirkverbindung mit der Antriebswelle.

Damit der Nebenabtrieb beim Stillstand des Fahrzeugs betreibbar ist, kann die erste oder die zweite Abtriebswelle vom Differenzialgetriebe abgekoppelt werden, wodurch beide Abtriebswellen des Differenzialgetriebes bei drehender Antriebswelle des Verteilergetriebes still stehen.
Zusätzlich besteht noch die Möglichkeit, den Abtriebsflansch des Nebenabtriebs über eine Kupplung zuzuschalten oder abzukoppeln.

Das Differenzialgetriebe ist als Planetengetriebe ausgeführt. Es besteht jedoch auch die Möglichkeit, andere Differenzialgetriebe, wie beispielsweise Kegelrad-Differenzialgetriebe, zu verwenden. Beim Differenzialgetriebe, welches als Planetengetriebe ausgebildet ist, ist das Hohlrad über eine Schalteinrichtung mit der ersten Abtriebswelle wirkverbunden und der Planetenträger ist mit der Antriebswelle verbunden und bildet die Eingangswelle in das Differenzialgetriebe. Das Sonnenrad des Planetengetriebes ist über ein Stirnradgetriebe mit der zweiten Abtriebswelle wirkverbunden und der Nebenabtrieb wird über den Planetenträger angetrieben.

In einer Ausgestaltungsform der Erfindung, ist eine Differenzialsperre im Verteilergetriebe angeordnet und verbindet im gesperrten Zustand das Sonnenrad des Planetengetriebes mit dem Planetenträger.

Die Differenzialsperre ist zwischen einem Antriebsflansch der Antriebswelle und dem Stirnradgetriebe zur zweiten Abtriebswelle angeordnet.

Durch die erfindungsgemäßen Merkmale wird ein Verteilergetriebe geschaffen, welches ein sperrbares Differenzial und einen Nebenabtrieb aufweist, welcher auch im Stillstand mit gutem Wirkungsgrad betreibbar ist, ohne hierbei die Einbaulänge des Verteilergetriebes so zu erhöhen, dass dieses nicht im Nutzfahrzeug verwendbar ist.

Weitere Merkmale sind der Figurenbeschreibung zu entnehmen.

### Es zeigen

Fig. 1 ein Getriebeschema des Verteilergetriebes;
Fig. 2 ein Getriebeschema des Verteilergetriebes; und

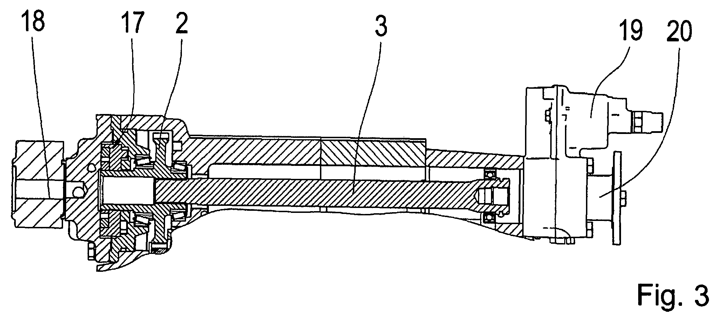

Fig. 3 einen Ausschnitt des Nebenabtriebs der Fig. 1.

### Figur 1:

Eine Antriebswelle 1 treibt über eine Eingangswelle 7 einen Planetenträger 9 des Differenzialgetriebes, welches als Planetengetriebe 8 ausgebildet ist, an. Der Planetenträger 9 ist über ein Stirnradgetriebe 2 mit der Nebenabtriebswelle 3 eines Nebenabtriebs verbunden. Das Hohlrad 10 des Planetengetriebes 8 ist über eine Schalteinrichtung 4 mit der ersten Abtriebswelle 11 verbindbar. In einer ersten Stellung 5 ist das Hohlrad 10 von der ersten Abtriebswelle 11 abgekoppelt und in einer zweiten Schaltstellung 6 ist das Hohlrad 10 mit der ersten Abtriebswelle 11 drehfest verbunden. Das Sonnenrad 12 ist über das Stirnradgetriebe 13 mit der zweiten Abtriebswelle 14 wirkverbunden. Das Planetenrad 15 ist mit dem Hohlrad 10 und dem Sonnenrad 12 wirkverbunden. Über die Differenzialsperre 16 ist bei geschalteter Differenzialsperre das Sonnenrad 12 mit dem Planetenträger 9 drehfest verbunden und bei geöffneter Differenzialsperre 16 das Sonnenrad 12 zum Planetenträger 9 verdrehbar. Befindet sich die Schalteinrichtung 4 in ihrer ersten Schaltstellung 5 und die Antriebswelle 1 wird angetrieben, so steht die erste Abtriebswelle 11 still und da sich das Hohlrad 10 frei drehen kann, steht auch das Sonnenrad 12 und somit die zweite Abtriebswelle 14 still, obwohl sich der Planetenträger 9 und somit die Nebenabtriebswelle 3 dreht, mit anderen Worten, so dreht sich der Planetenträger 9 und somit die Nebenabtriebswelle 3, da die erste Abtriebswelle 11 still steht und sich somit das Hohlrad 10 frei drehen kann und auch die zweite Abtriebswelle 14 still steht. Bedingung für einen drehenden Nebenabtriebsbetrieb im Stillstand ist, dass die Abtriebswelle 14 und somit das Sonnenrad 12 still stehen und das Hohlrad 10 frei drehbar ist.

### Figur 2:

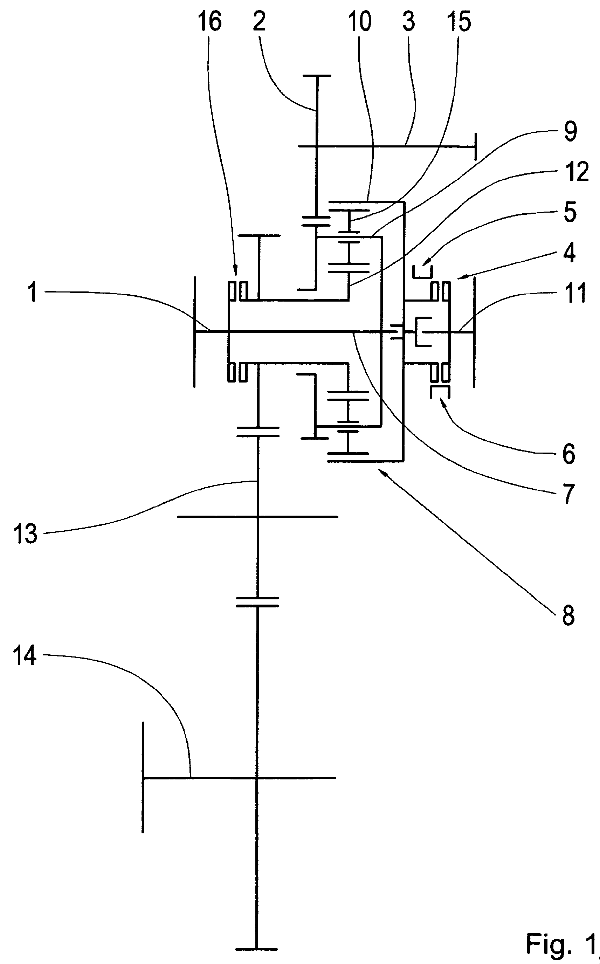

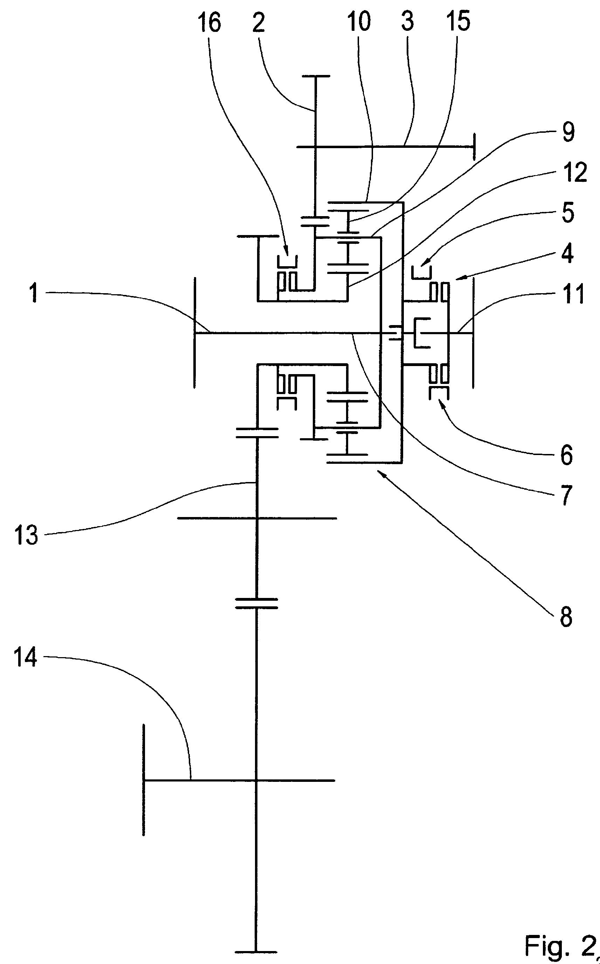

Die Figur 2 unterscheidet sich von der Figur 1 dadurch, dass die Differenzialsperre 16 zwischen dem Stirnradgetriebe 13 und dem Stirnradgetriebe 2 angeordnet ist, wobei mittels der Differenzialsperre 16 das Sonnenrad 12 mit dem Planetenträger 9 verbindbar ist. Die weiteren Funktionen und Bauteile entsprechen der Figur 1.

### Figur 3:

Die Nebenabtriebswelle 3 wird über das Stirnradgetriebe 2 angetrieben, wobei zusätzlich eine Ölpumpe 17 angetrieben wird. Diese fördert Druck- und Schmiermittel zum Ölkühler 18 und zu Steuerungs- und Antriebsbauteilen. Es besteht auch die Möglichkeit, dass die Ölpumpe 26 für andere Verbraucher verwendet wird, wobei nicht zwingend ein Ölkühler vorhanden sein muss. Die Nebenabtriebswelle 3 ist mit einer Kupplung 20 verbunden, welche den Nebenabtriebsflansch 19 mit der Nebenabtriebswelle 3 verbindet oder diesen von dieser trennt.

### Bezugszeichen

- 1: Antriebswelle
- 2: Stirnradgetriebe
- 3: Nebenabtriebswelle
- 4: Schalteinrichtung
- 5: erste Stellung
- 6: zweite Stellung
- 7: Eingangswelle
- 8: Planetengetriebe
- 9: Planetenträger
- 10: Hohlrad
- 11: erste Abtriebswelle
- 12: Sonnenrad
- 13: Stirnradgetriebe
- 14: zweite Abtriebswelle
- 15: Planetenrad
- 16: Differenzialsperre
- 17: Ölpumpe
- 18: Ölkühler
- 19: Kupplung
- 20: Nebenabtriebsflansch

## Patentansprüche

1. Verteilergetriebe mit einer drehbar um eine Drehachse angeordnete Antriebswelle (1) und einer drehbar um eine Drehachse angeordnete erste Abtriebswelle (11) und einer drehbar um eine Drehachse angeordnete zweite Abtriebswelle (14), wobei die Drehachse der ersten Abtriebswelle (11) koaxial zur Drehachse der Antriebswelle (1) und die Drehachse der zweiten Abtriebswelle (14) beabstandet zur Drehachse der Antriebswelle (1) angeordnet ist und mit einem Differenzialgetriebe (8), bei welchem eine Drehachse einer Eingangswelle (7) des Differenzialgetriebes (8) koaxial zur Drehachse der Antriebswelle (1) angeordnet ist und einer Differenzialsperre (16), mittels welcher die Ausgleichsfunktion des Differenzialgetriebes (8) sperrbar ist und wobei die erste Abtriebswelle (1) vom Differenzialgetriebe (8) abkoppelbar ist, **dadurch gekennzeichnet, dass** eine Drehachse einer drehbar angeordneten Nebenabtriebswelle (3) beabstandet zur Drehachse der Antriebswelle (1) und beabstandet zur Drehachse der zweiten Abtriebswelle (14) angeordnet ist, wobei die Nebenabtriebswelle (3) in permanenter Wirkverbindung mit der Antriebswelle (1) steht und wobei die Differenzialsperre (16) zwischen einem Flansch der Antriebswelle (1) und einem Stirnradgetriebe (13) angeordnet ist, wobei das Stirnradgetriebe (13) das Differenzialgetriebe (8) mit der zweiten Abtriebswelle (14) trieblich verbindet oder wobei die Differenzialsperre (16) zwischen einem Stirnradgetriebe (13), welches das Differenzialgetriebe (8) mit der zweiten Abtriebswelle (14) trieblich verbindet, und einem weiteren Stirnradgetriebe (2) angeordnet ist

2. Verteilergetriebe nach Anspruch 1, **dadurch gekennzeichnet, dass** das Differenzialgetriebe (8) als Planetengetriebe oder als Kegelraddifferenzial ausgebildet ist.

3. Verteilergetriebe nach Anspruch 2, **dadurch gekennzeichnet, dass** das Differezialgetriebe (8) als Planetengetriebe ausgebildet ist, ein Sonnenrad (12) des Planetengetriebes (8) mit einem Stirnradgetriebe (13) wirkverbunden ist und das Hohlrad (10) des Planetengetriebes (8) mit der ersten Abtriebswelle (11) verbindbar ist und der Planetenträger (9) in permanenter Wirkverbindung mit der Antriebswelle (1) steht.

4. Verteilergetriebe nach Anspruch **dadurch gekennzeichnet, dass** die Nebenabtriebswelle (3) über ein/das weitere/s Stirnradgetriebe (2) mit dem Planetenträger (9) in permanenter Wirkverbindung steht.

5. Verteilergetriebe nach Anspruch 1, **dadurch gekennzeichnet, dass** die Antriebswelle (1) mit einer Abtriebswelle des Differenzialgetriebes (8) über die Differenzialsperre (16) verbindbar ist.

6. Verteilergetriebe nach Anspruch 1, **dadurch gekennzeichnet, dass** eine Abtriebswelle des Differenzialgetriebes (8) mit der ersten Abtriebswelle (11) über eine Schalteinrichtung (4) verbindbar ist.

## Claims

1. Transfer box having a drive-input shaft (1) which is arranged so as to be rotatable about an axis of rotation and having a first drive-output shaft (11) which is arranged so as to be rotatable about an axis of rotation and having a second drive-output shaft (14) which is arranged so as to be rotatable about an axis of rotation, wherein the axis of rotation of the first drive-output shaft (11) is arranged coaxially with respect to the axis of rotation of the drive-input shaft (1) and the axis of rotation of the second drive-output shaft (14) is arranged spaced apart from the axis of rotation of the drive-input shaft (1), and having a differential gearing (8), in the case of which an axis of rotation of an input shaft (7) of the differential gearing (8) is arranged coaxially with respect to the axis of rotation of the drive-input shaft (1), and having a differential lock (16) by way of which the differential function of the differential gearing (8) can be locked, and wherein the first drive-output shaft (1) can be decoupled from the differential gearing (8), **characterized in that** an axis of rotation of a rotatably arranged power take-off shaft (3) is arranged spaced apart from the axis of rotation of the drive-input shaft (1) and spaced apart from the axis of rotation of the second drive-output shaft (14), wherein the power take-off shaft (3) is permanently operatively connected to the drive-input shaft (1), and wherein the differential lock (16) is arranged between a flange of the drive-input shaft (1) and a spur-gear mechanism (13), wherein the spur-gear mechanism (13) connects the differential gearing (8) in terms of drive to the second drive-output shaft (14), or wherein the differential lock (16) is arranged between a spur-gear mechanism (13), which connects the differential gearing (8) in terms of drive to the second drive-output shaft (14), and a further spur-gear mechanism (2).

2. Transfer box according to Claim 1, **characterized in that** the differential gearing (8) is in the form of a planetary gear set or is in the form of bevel-gear differential.

3. Transfer box according to Claim 2, **characterized in that** the differential gearing (8) is in the form of a planetary gear set, a sun gear (12) of the planetary gear set (8) is operatively connected to a spur-gear mechanism (13), and the internal gear (10) of the planetary gear set (8) is connectable to the first drive-output shaft (11), and the planet carrier (9) is permanently operatively connected to the drive-input shaft (1).

4. Transfer box according to Claim 3, **characterized in that** the power take-off shaft (3) is permanently operatively connected to the planet carrier (9) by way of a/the further spur-gear mechanism (2).

5. Transfer box according to Claim 1, **characterized in that** the drive-input shaft (1) is connectable to a drive-output shaft of the differential gearing (8) by way of the differential lock (16).

6. Transfer box according to Claim 1, **characterized in that** a drive-output shaft of the differential gearing (8) is connectable to the first drive-output shaft (11) by way of a switching device (4).

## Revendications

1. Boîte de transfert comprenant un arbre d'entraînement (1) disposé de manière à pouvoir tourner autour d'un axe de rotation et un premier arbre de sortie (11) disposé de manière à pouvoir tourner autour d'un axe de rotation et un deuxième arbre de sortie (14) disposé de manière à pouvoir tourner autour d'un axe de rotation, l'axe de rotation du premier arbre de sortie (11) étant coaxial à l'axe de rotation de l'arbre d'entraînement (1) et l'axe de rotation du deuxième arbre de sortie (14) étant disposé à distance de l'axe de rotation de l'arbre d'entraînement (1) et comprenant un engrenage différentiel (8), un axe de rotation d'un arbre d'entrée (7) de l'engrenage différentiel (8) étant disposé de manière coaxiale à l'axe de rotation de l'arbre d'entraînement (1) et comprenant un verrouillage de différentiel (16) au moyen duquel la fonction de compensation de l'engrenage différentiel (8) peut être bloquée et le premier arbre de sortie (1) pouvant être désaccouplé de l'engrenage différentiel (8),
**caractérisée en ce qu'**un axe de rotation d'un arbre de sortie secondaire (3) disposé de manière rotative est disposé à distance de l'axe de rotation de l'arbre d'entraînement (1) et à distance de l'axe de rotation du deuxième arbre de sortie (14), l'arbre d'entraînement secondaire (3) étant en liaison fonctionnelle permanente avec l'arbre d'entraînement (1) et le verrouillage de différentiel (16) étant disposé entre une bride de l'arbre d'entraînement (1) et un engrenage à pignons droits (13), l'engrenage à pignons droits (13) reliant par entraînement l'engrenage différentiel (8) au deuxième arbre de sortie (14) ou le verrouillage de différentiel (16) étant disposé entre un engrenage à pignons droits (13) qui relie l'engrenage différentiel (8) au deuxième arbre de sortie (14) par entraînement et un engrenage à pignons droits supplémentaire (2).

2. Boîte de transfert selon la revendication 1, **caractérisée en ce que** l'engrenage différentiel (8) est réalisé sous forme de d'engrenage planétaire ou sous forme de différentiel à pignons coniques.

3. Boîte de transfert selon la revendication 2, **caractérisée en ce que** l'engrenage différentiel (8) est réalisé sous forme d'engrenage planétaire, une roue solaire (12) de l'engrenage planétaire (8) est en liaison fonctionnelle avec un engrenage à pignons droits (13) et la couronne dentée (10) de l'engrenage planétaire (8) peut être connectée au premier arbre de sortie (11) et le porte-satellites (9) est en liaison fonctionnelle permanente avec l'arbre d'entraînement (1).

4. Boîte de transfert selon la revendication 3, **caractérisée en ce que** l'arbre d'entraînement secondaire (3) est en liaison fonctionnelle permanente par le biais d'un/de l'engrenage à pignons droits supplémentaire (2) avec le porte-satellites (9).

5. Boîte de transfert selon la revendication 1, **caractérisée en ce que** l'arbre d'entraînement (1) peut être connecté à un arbre de sortie de l'engrenage différentiel (8) par le biais du verrouillage de différentiel (16).

6. Boîte de transfert selon la revendication 1, **caractérisée en ce qu'**un arbre de sortie de l'engrenage différentiel (8) peut être connecté au premier arbre de sortie (11) par le biais d'un dispositif de commutation (4).
